# EUROPEAN PATENT SPECIFICATION

(11) **EP 1 777 304 B1**
(45) Date of publication and mention of the grant of the patent: **13.11.2013**
(21) Application number: 05739079.1
(22) Date of filing: 12.05.2005
(51) Int. Cl.: C22B 3/00, C22B 23/00

(54) **METHOD OF RECOVERING NICKEL OR COBALT**
VERFAHREN ZUR GEWINNUNG VON NICKEL ODER COBALT
PROCÉDÉ POUR LA RÉCUPÉRATION DE NICKEL OU DE COBALT

(30) Priority: 27.05.2004 JP 2004158296
(43) Date of publication of application: 25.04.2007
(73) Proprietor: Pacific Metals Co., Ltd., Chiyoda-ku, Tokyo 100-0004 (JP)
(72) Inventor: YAKUSHIJI, Hiromasa, c/o Pacific Metals Co., Ltd., Hachinohe-city Aomori 031-8617 (JP); ITO, Seiji, c/o Pacific Metals Co., Ltd., Hachinohe-city, Aomori 031-8617 (JP); MIURA, Kazuhiko, c/o Pacific Metals Co., Ltd., Hachinohe-city, Aomori 031-8617 (JP); SHIMAMORI, Mitsuo, c/o Pacific Metals Co., Ltd., Hachinohe-city, Aomori 031-8617 (JP)
(74) Representative: Cabinet Plasseraud
(86) International application number: PCT/JP2005/008725
(87) International publication number: WO 2005/116281

(56) References cited:
- EP-A- 0 547 744
- WO-A-96/41025
- WO-A-03/093517
- JP-A- 2003 514 109
- JP-A- 2003 514 110
- US-A- 3 925 533
- US-A- 4 097 575
- US-A- 4 410 498

## Description

### TECHNICAL FIELD

The present invention relates to a process for recovering nickel or cobalt from an oxide ore.

### BACKGROUND ART

As processes for leaching nickel or cobalt from an oxide ore containing the metal using sulfuric acid, an atmospheric leaching process where a sulfuric acid solution containing nickel or cobalt is obtained at an atmospheric pressure (Non-Patent Document 1, Non-Patent Document 2) are known.
Non-Patent Document 1: Proc. Australas. Inst. Metall. No. 265, March. 1978
Non-Patent Document 2: The metallurgical Society, 1988 p447
Non-Patent Document 3: ISIJ International Vol43 (2003) No2 p181 to p186
Patent Document 4: WO 03/093517

### DISCLOSURE OF THE INVENTION

However, as described in Non-Patent Document 2, during leaching an oxide ore containing nickel, cobalt, magnesium and iron with sulfuric acid at an atmospheric pressure, not only nickel and cobalt but also iron are leached; specifically, when attempting to leach each of nickel and cobalt to 80 wt% or more, iron is also leached to 15 wt% or more. In general, since an oxide ore containing nickel and cobalt also contains iron 10 to 40 times as much as nickel, the process described in the publication may lead to increase in consumption of sulfuric acid in leaching and a higher iron concentration in a leachate, which may result in a higher cost for removing the iron. Thus, the process has a problem in a cost.

Non-Patent Document 3 (a recent research report on atmospheric leaching) has described that under a mixed gas atmosphere of CO/CO₂ (30 vol%/70 vol%) and a temperature of 700 °C, nickel and cobalt compounds may be reduced into metals and iron may be converted into magnetite, to leach 80 wt % to 90 wt% of nickel and 20 wt % to 30 wt% of iron at a temperature of 30 °C to 70 °C. This process, however, requires leaching at a temperature of 700 °C under a reduction atmosphere, leading to significant energy consumption. Thus, the process has many problems in its practical use.

In view of the above circumstances, an objective of the present invention is to provide a process for recovering nickel or cobalt from an oxide ore containing nickel or cobalt and iron, wherein a step selected according to a component ratio in the oxide ore is employed to obtain a solution containing a few iron, which may lead to reduction in a processing cost for removing iron while achieving a higher leaching rate for nickel or cobalt and thus efficient recovery of nickel or cobalt.

According to the present invention, there is provided a process for recovering nickel or cobalt from an oxide ore containing nickel or cobalt and iron as defined in claim 1. Said process comprises the steps of:
a preparing step where a first oxide ore and a second oxide ore is prepared with a higher magnesium content than the first oxide ore as the oxide ore;
a leaching step where nickel or cobalt is leached from the first oxide ore with sulfuric acid to obtain a sulfuric acid leachate containing nickel or cobalt and a leaching residue;
a reaction step where the sulfuric acid leachate containing the leaching residue is mixed with the second oxide ore to react the sulfuric acid leachate with magnesium in the second oxide ore for adjusting a pH to obtain a reaction solution containing nickel or cobalt and a reaction residue containing iron; and
a neutralization step where the reaction solution containing the reaction residue is neutralized with a neutralizing agent to obtain a neutralization solution containing nickel or cobalt and a neutralization residue containing iron.

According to the present invention, an iron concentration in the reaction solution can be reduced by adjusting a pH of the sulfuric acid leachate using magnesium in the second oxide ore after mixing the sulfuric acid leachate and the second oxide ore in the reaction step. It can, therefore, eliminate the necessity to use a large amount of a neutralizing agent for reducing an iron concentration in the reaction solution in the neutralizing step. Furthermore, nickel or cobalt in the second oxide ore can be leached by adjusting a pH with the second oxide ore in the reaction step. Thus, in a process for recovering nickel or cobalt, a higher leaching rate of nickel or cobalt can be achieved while reducing a process cost for removing iron, resulting in efficient recovery of nickel or cobalt.

In addition, iron content in the second oxide ore may be lower than that in the first oxide ore. Having such process, in the leaching step, nickel or cobalt can be leached efficiently using sulfuric acid and in the reaction step, a leaching rate of nickel or cobalt can be further improved while preventing an increase of an iron concentration in the reaction solution. Thus, nickel or cobalt can be more efficiently recovered.

Also, the process comprises: before the leaching step, a classifying step where the first oxide ore is classified into a first small particle oxide ore and a first large particle oxide ore and the second oxide ore is classified into a second small particle oxide ore and second large particle oxide ore; wherein in the leaching step, nickel or cobalt may be leached from the first large particle oxide ore, and in the reaction step, the sulfuric acid leachate containing the leaching residue may be reacted with magnesium contained in the second large particle oxide ore for adjusting a pH to obtain a reaction solution containing nickel or cobalt and a reaction residue containing iron. Therefore, a leaching rate of nickel or cobalt can be improved while further reducing a process cost for removing iron, resulting in more efficient recovery of nickel or cobalt.

In addition, the process comprises: after the classifying step, a pressure leaching step where nickel or cobalt is pressure leached from the first small particle oxide ore and the second small particle oxide ore with sulfuric acid to obtain a sulfuric acid pressure leachate containing nickel or cobalt and a pressure leaching residue. Consequently, a leaching rate of nickel or cobalt can be further improved while further reducing a process cost for removing iron, resulting in more efficient recovery of nickel or cobalt.

Also, the process may further comprise, after the pressure leaching step, neutralizing the sulfuric acid pressure leachate containing the pressure leaching residue with a neutralizing agent to obtain a neutralization solution containing nickel or cobalt and a neutralization residue containing iron.

In addition, the process may further comprise: after the neutralizing step, a solid-liquid separation step where the neutralization solution and the neutralization residue are solid-liquid separated using a thickener with a flocculant.

In the present invention, both the leaching step and the reaction step may be performed at an atmospheric pressure. Thus, increase in a facility cost can be prevented.

An atmospheric pressure shall encompass a pressure near the atmospheric pressure.

Further, in the leaching step, nickel or cobalt may be leached from the first oxide ore further using a sodium salt to obtain a sulfuric acid leachate containing nickel or cobalt and a leaching residue, and in the reaction step, the sulfuric acid leachate containing the leaching residue may be reacted with magnesium contained in the second oxide ore for adjusting a pH to obtain a reaction solution containing nickel or cobalt and a reaction residue containing iron. Thus, in the leaching step, sulfuric acid and a sodium salt may be used to form Natrojarosite, which is then precipitated by adjusting pH using magnesium to reduce an iron concentration in a reaction solution in the reaction step. It may, therefore, eliminate the necessity for using a large amount of a neutralizing agent for reducing an iron concentration in a reaction solution in the neutralization step. Consequently, in the process for recovering nickel or cobalt, a higher leaching rate of nickel or cobalt can be achieved while further reducing a process cost for removing iron, resulting in more efficient recovery of nickel or cobalt.

According to the present invention, in a process for recovering nickel or cobalt from an oxide ore containing nickel or cobalt and iron, a step selected in accordance with contents ratio in the oxide ore can be employed to obtain a solution containing a few iron, so that while reducing a process cost for removing iron, a higher leaching rate of nickel or cobalt can be achieved, resulting in efficient recovery of nickel or cobalt.

### BRIEF DESCRIPTION OF THE DRAWINGS

The above-mentioned objective and other objectives, features and advantages will be more clearly understood with reference to suitable embodiments described below and the accompanied drawings.
FIG. 1 is a schematic view of an ore deposit distribution for a nickel oxide ore in accordance with an embodiment of the present invention.
FIG. 2 is a flow chart in accordance with the embodiment of the present invention.

### BEST MODE FOR CARRYING OUT THE INVENTION

Embodiments of the present invention will be described with reference to the drawings and tables. Herein, an amount for quantity consumed and quantity added stands for the quantity consumed and the quantity added besed on their weight.

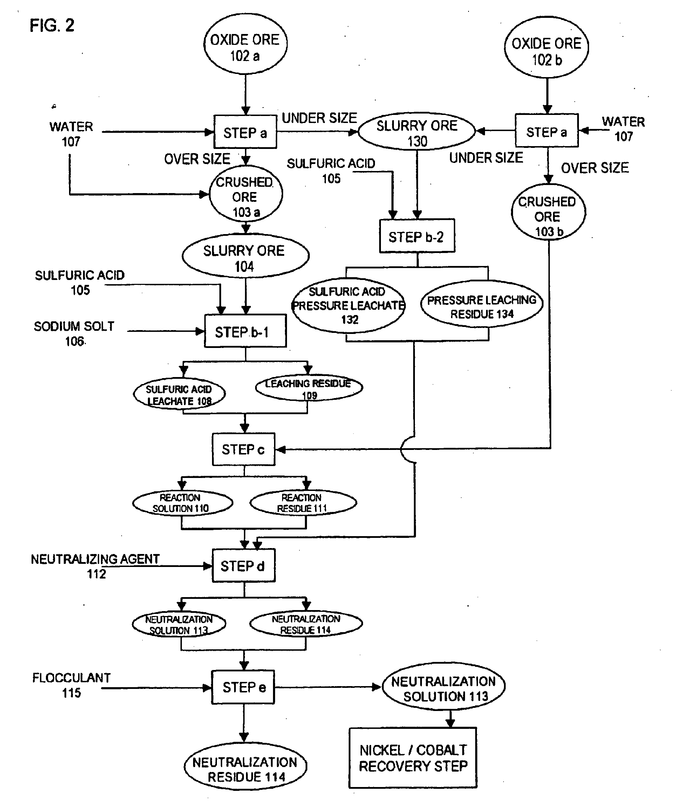

FIG. 2 is a flow chart of the present embodiment.

The process for recovering nickel or cobalt shown in FIG. 2 contains the following steps.
i) preparing a first oxide ore (oxide ore 102a) and a second oxide ore (oxide ore 102b) with a higher magnesium content than the first oxide ore as an oxide ore;
ii) leaching nickel or cobalt from the first oxide ore with sulfuric acid 105 to obtain a sulfuric acid leachate (sulfuric acid leachate 108) containing nickel or cobalt and a leaching residue 109;
iii) mixing the sulfuric acid leachate containing the leaching residue 109 with the second oxide ore to react the sulfuric acid leachate with magnesium in the second oxide ore for adjusting a pH to obtain a reaction solution 110 containing nickel or cobalt and a reaction residue 111 containing iron; and
iv) neutralizing the reaction solution 110 containing the reaction residue 111 with a neutralizing agent 112 to obtain a neutralization solution 113 containing nickel or cobalt and a neutralization residue 114 containing iron.

In the present embodiment, for example, a so-called limonite ore may be used as the oxide ore 102a and the oxide ore 102b. Herein, the term "so-called limonite ore" refers to an ore containing nickel, cobalt, magnesium and iron as their oxides. Also, for example, as a neutralizing agent, a ferronickel slag may be used. Herein, the term "ferronickel slag" refers to a slag generated during using a material generally known as a saprolite ore with a nickel content of 2 wt% or more and smelting ferronickel by pyrometallurgical smelting process.

In general, there are no specific definitions on a composition range between a limonite ore and a saprolite ore, but Table 1 shows compositions of an oxide ore which is called a limonite ore, and a ferronickel slag.
(Table 1)

**Table 1**

| **Components (wt%)** | | | | | |
|---|---|---|---|---|---|
| | **Ni** | **Co** | **Fe** | **Mg** | **Mg/Fe** |
| **Limonite ore** | **0.5-2.0** | **0.02-0.2** | **10-50** | **0.5-25** | **0.01-2.5** |
| **Ferronickel slag** | **≤ 0.1** | **≤0.01** | **≤10** | **15-25** | **≤1.5** |

In the present embodiment, for example, two limonite ores containing differentmetal contents can be used. Table 2 shows contents in two kinds of limonite ores. Table 2 shows the feature that the oxide ore 102a has a higher iron content and a lower magnesium content, while the oxide ore 102b has a lower iron content and a higher magnesium content.
(Table 2)

**Table 2**

| **Components (wt%)** | | | | | |
|---|---|---|---|---|---|
| **Oxide ore** | **Ni** | **Co** | **Fe** | **Mg** | **Mg/Fe** |
| **102a** | **1.10** | **0.090** | **45.0** | **1.5** | **0.03** |
| **102b** | **1.80** | **0.120** | **25.0** | **9.3** | **0.37** |

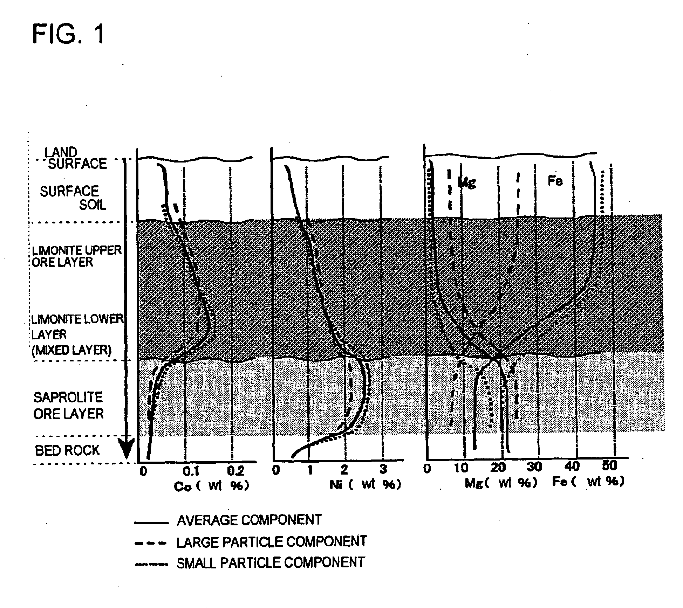

Using FIG. 1, there will be described a content distribution in a nickel oxide ore deposit from where, for example, a limonite ore is produced.

Herein, a saprolite ore layer is an ore layer used for smelting ferronickel by pyrometallurgical smelting process mainly using an electric furnace, and a limonite ore layer is an ore layer mainly used in hydrometallurgy process.

A nickel component content in an ore deposit tends to increase as a depth from a ground surface increases, but rapidly decreases near a bed rock. Also, a nickel component content in an over size (large particle) ore when an oxide ore is classified tends to be higher in the upper layer of the limonite ore layer and lower in the lower layer of the limonite ore layer or the saprolite ore layer in comparison with a nickel component content in an under size (small particle) ore.

A cobalt component content tends to increase as a depth from a ground surface increases, but rapidly decreases from the vicinity of a border between the lower layer of the limonite ore layer and the saprolite ore layer. In addition cobalt component content in an over size ore when an oxide ore is classified tends to be higher in the upper layer of the limonite ore layer and lower in the lower layer of the limonite ore layer or the saprolite ore layer in comparison with a cobalt component content in an under size ore.

An iron component content tends to decrease as a depth from a ground surface increases, but rapidly decreases from the vicinity of a border between the lower layer of the limonite ore layer and the saprolite ore layer. In addition, iron component content in an over size ore when an oxide ore is classified tends to be lower in any ore layer and particularly lower in the limonite ore layer in comparison with an iron component content in an under size ore.

A magnesium component content tends to increase as a depth from a ground surface increases, but rapidly increases from the vicinity of a border between the lower layer of the limonite ore layer and the saprolite ore layer. Also, a magnesium component content tends to be higher in any ore layer and particularly higher in the limonite ore layer in comparison with a magnesium component content in an under size ore.

Here, as shown in the component distribution of a nickel oxide ore deposit in FIG. 1, the oxide ore 102a with a higher iron content and a lower magnesium content is often present in a relatively upper layer in the nickel oxide ore deposit zone, while the oxide ore 102b with a lower iron content and a higher magnesium content is often present in a middle layer in the nickel oxide ore deposit zone.

FIG. 2 shows a process for recovering nickel or cobalt from an oxide ore 102a with a higher iron content and a lower magnesium content and from an oxide ore 102b with a lower iron content and a higher magnesium content. Here, for example, the oxide ore 102a may be that produced from the upper layer of the limonite ore layer, that is, a relatively upper layer of the nickel oxide ore deposit zone, while the oxide ore 102b may be that produced from the lower layer of the limonite ore layer, that is, a middle layer of the nickel oxide ore deposit zone.

There will be described a process flow in this embodiment.

First, in step a (classification step), an oxide ore 102a and an oxide ore 102b are classified into an over size and an under size, respectively. The under size is treated with water 107 to obtain a slurry ore 130, and the over sizes are crushed into a crushed ore 103a and a crushed ore 103b, respectively. The crushed ore 103a is treated with water 107 to obtain a slurry ore 104.

Next, in step b-1 (leaching step), the slurry ore 104 is leached with sulfuric acid 105 to obtain a sulfuric acid leachate 108 containing nickel and cobalt and a leaching residue 109. Here, the leaching residue 109 may contain Natrojarosite generated by a reaction of iron leached from the slurry ore 104 with sulfuric acid 105 and a sodium salt 106.

In addition, in parallel with step b-1, the slurry ore 130 is pressure leached with sulfuric acid 105 in step b-2 (pressure leaching step), to obtain a sulfuric acidpressure leachate 132 containing nickel and cobalt and a pressure leaching residue 134.

Next, in step c (reaction step), the sulfuric acid leachate 108 containing the leaching residue 109 is mixed with the crushed ore 103b obtained by crushing in the classification step, to react free sulfuric acid in the sulfuric acid leachate 108 containing the leaching residue 109 with magnesium contained in the crushed ore 103b obtained by crushing in the classification step for consuming the free sulfuric acid and thus adjusting a pH, obtaining a reaction solution 110 and a reaction residue 111. By the pH adjustment, Natrojarosite may be precipitated into the reaction residue 111 to reduce an iron concentration in the reaction solution 110.

Next, in step d (neutralization step), a neutralizing agent 112 is added to a mixture of the reaction solution 110 containing the reaction residue 111 and the sulfuric acid pressure leachate 132 containing the pressure leaching residue 134 for pH adjustment to obtain a neutralization solution 113 and a neutralization residue 114. Here, since an iron concentration has been reduced in the reaction solution 110 in the reaction step as the previous step, the added quantity of the neutralizing agent 112 can be reduced.

Subsequently, in step e (solid-liquid separation step), a flocculant 115 is added to the neutralization solution 113 containing the neutralization residue 114 and then a thickener is used for solid-liquid separation to separate the neutralization solution 113 and the neutralization residue 114.

Next, the neutralization solution is fed to the step of recovering nickel and cobalt to recover nickel and cobalt.

Hereinafter, there will be described the detailed each steps.

### Step a: classification step

An oxide ore 102a and an oxide ore 102b such as a limonite ore containing nickel, cobalt, magnesium and iron are separately classified into an over size and an under size, respectively by, for example, a simple apparatus such as a vibrating screen. Herein, the term "over size" refers to an oxide ore with a larger size than a mesh of the vibrating screen and thus remaining on the screen without passing the mesh. The term "under size" refers to an oxide ore with a smaller size than a mesh of the vibrating screen and thus passing through the mesh. The under size of the oxide ore 102a and the under size of the oxide ore 102b are treated with water 107 to obtain a slurry ore 130, and the over size of the oxide ore 102a and the over size of the oxide ore 102b are treated by an apparatus such as a ball mill to obtain a crushed ore 103a and a crushed ore 103b, respectively. Then, the crushed ore 103a is treated with water 107 to obtain a slurry ore 104. Although there are no particular restrictions to a classification size by a vibrating screen or the like, for example, a mesh of 0.5 mm to 2 mm both inclusive may be used from the view of improving process stability.

When classifying the oxide ore by a screen with a mesh of about 0.5 mm to 2 mm, in both the oxide ore 102a and the oxide ore 102b, an under size tends to have a higher iron content and a lower magnesium content, while an over size tends to have a lower iron content and a higher magnesium content.

Water 107 may be, in addition to river water or ground water commonly used, marine water. Here, when applying a process according to the present embodiment, the process may be carried out around a mine from the view of an economical efficiency including a cost. Looking around an area where the mine is operated, it is not always easy to ensure adequate water such as river water and ground water. Furthermore, by using marine water as water 107, a sodium salt contained in the marine water may be utilized to obtain an effect to be able to control the residual amount of iron leached from an oxide ore in a leachate or a reaction solution in the leaching step or the reaction step as a later step.

### Step b-1: leaching step

The slurry ore 104 obtained in step a can be leached, for example, with sulfuric acid 105 at an atmospheric pressure and a temperature of not less than 90 °C and not more than 100 °C, to provide a sulfuric acid leachate 108 containing nickel, cobalt, magnesium and iron and a leaching residue 109.

Leaching at a 90 °C or higher can improve a leaching rate for nickel and cobalt in the slurry ore 104. Thus, a leaching time for nickel and cobalt in the slurry ore can be reduced. In addition, a leaching rate for nickel and cobalt can be increased. By leaching of nickel or cobalt contained in the slurry ore at 100 °C or lower, leaching nickel and cobalt at a temperature equal to or lower than the boiling point of water can be performed. It can thus eliminate the necessity for pressurizing a container for leaching nickel and cobalt, which is used in this step. Therefore, increase in a facility cost can be pressurized.

Here, although a leaching temperature is defined as 90 °C or higher in the above description, for instance, a temperature of 70 °C or higher may be appropriately selected. Alternatively, nickel and cobalt in the slurry ore 104 may be leached at more than 100 °C. Furthermore, nickel and cobalt in the slurry ore 104 may be leached under a pressure condition other than an atmospheric pressure.

The added amount of sulfuric acid may be 0. 5 to 0. 8 times by weight both inclusive of that of the used over size of the oxide ore 102a. With sulfuric acid in 0.5 times by weight or more amounts, nickel and cobalt can be sufficiently leached, and with sulfuric acid in about 0.8 times by weight amount, a leaching rate for nickel and cobalt is in equilibrium. Therefore, using sulfuric acid in 0. 8 times by weight or less amount, the amount of excessive sulfuric acid (free sulfuric acid) may be reduced. Thus, while maintaining a leaching rate for nickel and cobalt from an oxide ore, increase in a cost for recovering nickel and cobalt can be reduced.

Also, in step b-1, the crushed over size ore 103a of the oxide ore 102a classified in the classification step is used because of the reason described below. In comparison with the crushed over size ore 103b of the oxide ore 102b, leaching of nickel and cobalt in the oxide ore is more difficult in the crushed over size ore 103a of the oxide ore 102a. Therefore, excessive sulfuric acid is used to leach more nickel and cobalt in the oxide ore for improving a recovery rate of nickel and cobalt. Furthermore, crushed ore 103b of the over size ore of the oxide ore 102b contains more magnesium than the crushed ore 103a of the over size of the oxide ore 102a. Therefore, when the crushed ore 103b of the over size of the oxide ore 102b is used in step b-1, free sulfuric acid to be used for leaching may be consumed. Thus, the crushed ore 103a of the over size of the oxide ore 102a is used in the leaching step, to improve a recovery rate of nickel and cobalt.

When using river water or ground water as water 107 in step a, a sodium salt 106 such as sodium sulfate and sodium chloride may be added in step b-1. Here, an added content of sodium derived from the sodium salt 106 may be about 0.01 to 0.05 times by weight of a content of an oxide ore 102. On the other hand, when using marine water as water 107, an additional sodium salt is not necessary because marine water contains sodium in about 10 g/L. Thus, while maintaining a leaching rate for nickel and cobalt from an oxide ore, increase in a cost for recovering nickel and cobalt can be further reduced.

Here, since the added amount of sodium is 0.01 times by weight or more, iron leached from the oxide ore can be reacted with sodium sulfate in the sulfuric acid leachate 108 to reduce an iron concentration in the sulfuric acid leachate 108.

It may be assumed that sodium would control an iron concentration in the sulfuric acid leachate 108 in accordance with chemical reaction equations (1) to (3).

FeO(OH)·(oxide ore)+3/2H₂SO₄ = 1/2Fe₂ (SO₄)₃· (liquid) +2H₂O (1)

Fe₂(SO₄)₃·(liquid)+1/3Na₂SO₄+4H₂O = 2/3NaFe₃(SO₄)₂(OH)₆·(solid)+2H₂SO₄ (2)

Fe₂ (SO₄)₃·(liquid) +2/3NaCl+4H₂O = 2/3NaFe₃(SO₄)₂(OH)₆·(solid)+2/3HCl+5/3H₂SO₄ (3)

That is, iron in the oxide ore is leached with excessive sulfuric acid and combined with sodium in the sulfuric acid leachate to generate Natrojarosite, resulting in precipitation of part of iron leached. Thus, iron leached from the oxide ore is contained in a leachate, so that increase in its amount involved in the next reaction step can be reduced. So, in the reaction step, more iron can be removed by precipitation as Natrojarosite. Thus, in the neutralization step after the reaction step, increase in a cost for precipitating iron in a neutralization solution can be more reduced. As a result, increase in a cost for recovering nickel and cobalt from the oxide ore can be more prevented.

Also, with sodium added in about 0.05 times by weight amount, a generation rate of Natrojarosite and a precipitation rate of Natrojarosite are in equilibrium. Therefore, by adding sodium in 0.05 times by weight amount or less, addition of an excessive amount of sodium can be prevented. Thus, increase in a cost for recovering nickel and cobalt from the oxide ore can be more prevented.

A leaching time may be 1 to 10 hours both inclusive, or alternatively 3 to 6 hours both inclusive.

### Step b-2: pressure leaching step

The slurry ore 130 of the under size of the oxide ore 102a and the under size of the oxide ore 102b obtained in step a can be leached by adding sulfuric acid 105 under high temperature and high pressure conditions, for example, a temperature of 220 °C to 270 °C and a pressure of 20 atm to 50 atm, using, for example, an autoclave, to obtain a sulfuric acid pressure leachate 132 containing nickel, cobalt, magnesium and iron and a pressure leaching residue 134. Here, a leaching time may be 5 minutes to 90 minutes both inclusive, or alternatively 10 minutes to 60 minutes both inclusive.

The added amount of the sulfuric acid 105 may be 0.12 to 0. 4 times by weight both inclusive of the used amount of the under size ore of the oxide ore 102a and the under size ore of the oxide ore 102b. With sulfuric acid in 0.12 times by weight or more amount, nickel and cobalt can be sufficiently leached, and with sulfuric acid in about 0.4 times by weight amount, a leaching rate for nickel and cobalt is in equilibrium. Therefore, using sulfuric acid in 0.4 times by weight or less amount, excessive sulfuric acid (free sulfuric acid) may be reduced. Thus, while maintaining a leaching rate for nickel and cobalt from an oxide ore, increase in a cost for recovering nickel and cobalt can be prevented.

The reason why the under size ore of the oxide ore 102a and the under size ore of the oxide ore 102b classified in the classification step are used in step b-2, is as follows. That is to say, in the under size ore of the oxide ore 102a and the under size ore of the oxide ore 102b, leaching of nickel and cobalt in the oxide ore is more difficult in comparison with the crushed ore 103a of the over size of the oxide ore 102a and the crushed ore 103b of the over size of the oxide ore 102b. Therefore, more nickel and cobalt can be leached by pressure leaching of the oxide ore with sulfuric acid 105 under high temperature and high pressure conditions using an autoclave or the like, to improve a recovery rate of nickel and cobalt. Furthermore, under high temperature and high pressure conditions, iron in the oxide ore is not readily leached into the sulfuric acid leachate. Therefore, the amount of iron carried over the neutralization step (step d) described later can be reduced. Thus, a step can be selected, in which the oxide ore is leached in accordance with easiness of nickel and cobalt in each oxide ore by leaching nickel and cobalt in a short period while performing the leaching with preventing increase in a cost using the over size ore of the oxide ore 102a from where nickel and cobalt can be readily leached in the leaching step (step b-1) and preventing leaching of iron using the under size ore of the oxide ore 102a and the under size ore of the oxide ore 102b from which nickel and cobalt cannot be readily leached in the pressure leaching step (step b-2). Therefore, by combining the leaching step (step b-1) with the pressure leaching step (step b-2), nickel and cobalt can be more efficiently leached from the oxide ore 102a and the oxide ore 102b.

In addition, the over size ore of the oxide ore 102a and the over size ore of the oxide ore 102b contains more magnesium than the under size ore of the oxide ore 102a and the under size ore of the oxide ore 102b. Therefore, when using the over size ore of the oxide ore 102a and the over size ore of the oxide ore 102b in the pressure leaching step (step b-2), for example, magnesium salts as a scale may adhere to the inner portion of a pressure leaching apparatus such as an autoclave and a pipe. It may, therefore, lead to the necessity for removing the adhering scale while stopping the pressure leaching apparatus, causing reduction in an operating rate. By contrast, the under size ore of the oxide ore 102a and the under size ore of the oxide ore 102b contain less magnesium than the above over size ores. Thus, when using them in the pressure leaching step, for example, adhesion of a scale to the inner part of the pressure leaching apparatus and a pipe can be prevented. Therefore, since an operating rate in facilities including a pressure leaching apparatus such as an autoclave can be improved, nickel and cobalt can be efficiently leached from the oxide ore 102a and the oxide ore 102b.

### Step c: reaction step

The sulfuric acid leachate 108 and the leaching residue 109 obtained in step b-1 are mixed with the crushed over size ore 103b of the oxide ore 102b obtained in step a. The mixture is reacted, for example, at an atmospheric pressure and a temperature of not less than 90 °C and not more than 100 °C in accordance with equations (4) to (7). In accordance with a reaction equation described later, a reaction solution 110 containing nickel, cobalt, magnesium and a small amount of iron and a reaction residue 111 can be obtained.

The crushed ore 103b may be added as a solid as it is, or alternatively added as a slurry with water. In this step, water may be selected from river water, ground water and marine water. Also, the water may contain a sodium salt 106 such as sodium sulfate and sodium chloride.

The reaction at a temperature of 90 °C or higher can improve a leaching rate of nickel and cobalt contained in the crushed ore 103b. In addition, efficiency for removing iron leached in step b-1 as Natrojarosite by precipitation can be improved. Furthermore, the reaction at a temperature of 100 °C or lowermaybe a reaction in accordance with a chemical equation described later at a temperature equal to or lower than the boiling point of water. It is, therefore, not necessary to pressurize a reaction container in an apparatus for the reaction. Thus, increase in a facility cost can be prevented.

Here, at a leaching temperature lower than 90 °C or higher than 100 °C, the reaction may be performed as a reaction in accordance with a chemical equation described later. Also, the reaction in accordance with the chemical equation described later may be performed at a pressure other than an atmospheric pressure.

In the present embodiment, an iron concentration in the sulfuric acid leachate 108 in step b-1 is 30 g/L to 90 g/L. Although free sulfuric acid is contained in 30 g/L or more, the free sulfuric acid reacts with magnesium contained in the crushed ore 103b to reduce an iron concentration to 1/10 or less and a free sulfuric acid concentration 1/3 or less, respectively, compared with those in the sulfuric acid leachate 108 before the reaction. Here, a pH of the sulfuric acid leachate 108 before the reaction is, for example, within a range of pH 0.2 to pH 0.8. A pH of the solution after the reaction may be within a range of pH 1 to pH 3, or alternatively, a range of pH 1.5 to pH 2.

The reason may be explained by chemical reactions (4) to (7).

H₂SO₄ (free sulfuric acid)+MgO (oxide ore)= MgSO₄ (liquid) +H₂O (4)

Fe₂ (SO₄)₃· (liquid) +1/3Na₂SO₄+4H₂O = 2/3NaFe₃(SO₄)₂(OH)₆·(solid)+2H₂SO₄ (5)

Fe₂(SO₄)_{3·}(liquid)+2/3NaCl+4H₂O = 2/3NaFe₃(SO₄)₂(OH)₆·(solid)+2/3HCl+5/3H₂SO₄ (6)

Fe₂(SO₄)₃·(liquid)+4H₂O = 2FeO(OH)·(solid)+3H₂SO₄ (7)

Specifically, in accordance with equation (4), free sulfuric acid in the sulfuric acid leachate 108 reacts with magnesium contained in the crushed ore 103b to reduce the amount of free sulfuric acid, resulting in increase of pH of the solution. Thus, as a pH of the liquid is increased, Natrojarosite and Goethite are generated in accordance with equations (5) to (7), resulting in precipitation of iron.

Since the crushed ore 103a of the over size of the oxide ore 102a and the crushed ore 103b of the over size of the oxide ore 102b contain iron and magnesium, the above reaction can more efficiently proceed. For example, when a component ratio of magnesium/iron is 0.03 or more, the amount of iron contained in the crushed ore 103a of the over size of the oxide ore 102a and the crushed ore 103b of the over size of the oxide ore 102b is relatively smaller, so that in accordance with equation (1), a relatively smaller amount of iron is leached from the oxide ore in the leaching step. Thus, an iron concentration in the reaction solution can be also reduced. Furthermore, since a relatively larger amount of magnesium is contained in the oxide ore 102a and the oxide ore 102b, the amount of magnesium reacting with free sulfuric acid brought from the sulfuric acid leachate 108 into the reaction step is relatively larger. Therefore, in accordance with the reaction of equation (4), free sulfuric acid in the sulfuric acid leachate 108 can be sufficiently consumed using magnesium, resulting in pH adjustment.

As described above, iron and magnesium contained in the crushed ore 103a of the over size of the oxide ore 102a and the crushed ore 103b of the over size of the oxide ore 102b may allow iron to be sufficiently precipitated in accordance with equations (5) to (7), resulting in reduction in an iron concentration remaining in the reaction solution 110. Thus, the amount of iron remaining in the reaction solution 110 and thus brought in the neutralization step may be reduced. Therefore, increase in a cost for precipitating iron in the neutralization step may be prevented. As a result, increase in a cost for recovering nickel and cobalt can be prevented.

There is not a particular upper limit to a component ratio of magnesium/iron; for example, 0.75 or more may be acceptable.

Also, in step c, the reason why the crushed ore 103b of the over size of the oxide ore 102b is used is the crushed ore 103b of the over size contains more magnesium than the crushed ore 103a of the over size of the oxide ore 102a, so that the reactions of equations (4) to (7) more effectively proceed. A reaction time may be 3 to 10 hours both inclusive, alternatively 4 to 6 hours both inclusive; that is, the reactions of equations (4) to (7) can be completed in a shorter time than the case where an oxide ore before classification is used. Here, since the crushed ore 103b of the over size contains nickel and cobalt, free sulfuric acid may be reacted with magnesium to adjust a pH while leaching nickel and cobalt in the crushed ore 103b to further improve a recovery rate for nickel and cobalt. Thus, while preventing increase in a cost for recovering nickel and cobalt, a recovery rate for nickel and cobalt can be further improved.

Here, a facility for the reaction may be suitably a container with a stirrer commonly used, whichmaybemadeof, for example, stainless steel or a rubber lined steel.

Further, this step may be performed using a ferronickel slag which contains nickel in a relatively higher content among some ferronickel slag used in the neutralization step, together with the crushed ore 103b of the over size. In this case, the slag may be used in a range such that a final pH during the reaction is less than 3. With a pH of less than 3, the solution contains free sulfuric acid, which can prevent reduction in a leaching efficiency for nickel from an oxide ore.

### Step d: neutralization step

A neutralization reaction is performed using the reaction solution 110 and the reaction residue 111 obtained in step c, the sulfuric acid pressure leachate 132 and the pressure leaching residue 134 obtained in step b-2, and a neutralizing agent 112. A pH in a neutralization step may be within a range of pH 2 to pH 6, or alternatively a range of pH 3 to pH 5. Thus, a neutralization solution 113 with an iron concentration of 1 g/L or less which also contains nickel, cobalt and magnesium, and a neutralization residue 114 is obtained. With a pH of 2 or higher, iron may be sufficiently precipitated. With a pH of 6 or lower, most of iron can be removed by precipitation while preventing coprecipitation of nickel and cobalt. Thus, a recovery rate for nickel and cobalt can be improved.

There are no particular restrictions to a pressure in this step. For example, a neutralization reaction may be performed using the reaction solution 110, the reaction residue 111, the sulfuric acid pressure leachate 132, the pressure leaching residue 134 and the neutralizing agent 112 at an atmospheric pressure, or alternatively at a pressure other than an atmospheric pressure.

As the neutralizing agent 112 include hydroxides of an alkali metal such as sodium hydroxide; carbonates of an alkali metal such as sodium carbonate; hydroxides of an alkaline earth metal such as calcium hydroxide and magnesium hydroxide; oxides of an alkaline earth metal such as calcium oxide and magnesium oxide; carbonates of an alkaline earth metal such as calcium carbonate and magnesium carbonate, which are commonly used, may be used. Also, a ferronickel slag having a composition shown in Table 1 may be used. Further, the above neutralizing agents may be used alone or in combination of two or more.

As used herein, the term "ferronickel slag" refers to a slag containing magnesium obtained during smelting ferronickel using a magnesium containing ore containing nickel in 2 wt% or more by pyrometallurgical smelting process. The amount of a ferronickel slag generated by pyrometallurgical smelting process is about 30 to 35 parts to 1 part of nickel 1, but only a part of the slag is effectively used.

By using, for example, a ferronickel slag containing magnesium as a neutralizing agent 112, magnesium contained in the ferronickel slag can be effectively utilized as a neutralizing agent while neutralizing the reaction solution 110, the reaction residue 111, the sulfuric acid pressure leachate 132 and the pressure leaching residue 134. Thus, while effectively utilizing resources, increase in a cost for recovering nickel and cobalt can be prevented.

Also, in addition to a ferronickel slag, any agent such as calcium hydroxide, magnesium hydroxide, calcium oxide, magnesium oxide, calcium carbonate and magnesium carbonate can be used as the neutralizing agent 112 as long as it can neutralize the reaction solution 110, the reaction residue 111, the sulfuric acid pressure leachate 132 and the pressure leaching residue 134.

### Step e: Solid-liquid separation step

The neutralization solution 113 and the neutralization residue 114 obtained in step d are separated by adding a flocculant 115. The flocculant 115 may be, for example, a polymer flocculant. The solid-liquid separation may be performed by a commonly used thickener method; specifically, by countercurrent washing method with a 6 or more stage thickener. Thus, the neutralization solution 113 containing nickel, cobalt and magnesium and the neutralization residue 114 are easily and efficiently separated by the solid-liquid separation such that nickel and cobalt in the neutralization solution is recovered in a high yield of 99 wt% or more and iron is contained in a low concentration of 1 g/L or less.

The flocculant 115 may be, besides a polymer flocculant, any flocculant as long as it can separate the neutralization solution 113 from the neutralization residue 114.

Also, solid-liquid separation into the neutralization solution 113 and the neutralization residue 114 may be performed using another type of solid-liquid separator whose system is other than countercurrent washing with a 6 or more stage thickener.

As a method for recovering nickel and cobalt from the neutralization solution 113, for example, adding sodium hydro sulfide, sodium sulfide, ammonium sulfide and hydrogen sulfide to the neutralization solution 113 to recover by precipitation of nickel and cobalt as a mixed sulfide as described in Japanese Laid-open patent publication No. H06-81050, or adding a hydroxide, an oxide or a carbonate to the solution to recover by precipitation of nickel and cobalt as a mixed hydroxide or mixed carbonate as described in Japanese Laid-open patent publication No. H12-234130. Here, the precipitation of mixed sulfide of nickel and cobalt is recovered in the form of metallic nickel or metallic cobalt by hydrometallurgical process. Furthermore, a mixed hydroxide or mixed carbonate of nickel and cobalt is recovered in the form of ferronickel by pyrometallurgical smelting process.

As described above process, nickel and cobalt can be efficiently recovered from an oxide ore containing nickel, cobalt and iron.

There has been described one suitable embodiment of this invention. However, the present invention is not limited to the embodiments, it is, of course, apparent to the skilled in the art that the above embodiment may be modified within the range of the present invention.

For example, although there has been described recovery of nickel and cobalt using an oxide ore containing both nickel and cobalt in the present embodiment, an oxide ore containing only nickel may be used for recovering nickel or an ore containing only cobalt may be used for recovering cobalt. Alternatively, using an oxide ore containing both nickel and cobalt, only nickel may be recovered or only cobalt may be recovered.

Also, although there has been described an aspect containing step a for classifying an oxide ore containing nickel and cobalt in the present embodiment, the step may be omitted.

In addition, although there has been described an aspect containing step b-2 for pressure leaching the slurry ore 130 with sulfuric acid 105 in the present embodiment, the step may be omitted.

Also, although there has been described an aspect containing the reaction step (step c) using the crushed ore 103b of the over size of the oxide ore 102b classified by the classification step (step a) to adjust a pH in the present embodiment, a substance containing magnesium other than an oxide ore may be used in combination with the crushed ore 103b.

Also, although there has been described an aspect where the sulfuric acid pressure leachate 132 containing the pressure leaching residue 134 obtained in the pressure leaching step (step b-2) is mixed with the reaction solution 110 containing the reaction residue 111 obtained in the reaction step (step c) and the mixture is neutralized in the neutralization step in the present embodiment, each of these may be neutralized by a separate step.

In addition, although there has been described an aspect where the sulfuric acid pressure leachate 132 containing the pressure leaching residue 134 obtained in the pressure leaching step (step b-2) is mixed with the reaction solution 110 containing the reaction residue 111 obtained in the reaction step (step c) and neutralized in the neutralization step in the present embodiment, solid-liquid separation may be performed using, for example, a 6 stage thickener before neutralization in the neutralization step.

Alternatively, in the leaching step (step b-1), leaching may be performed using a reducing agent in combination with sulfuric acid, to further improve a leaching rate for nickel and cobalt.

Here, as a reducing agent, for instance, iron powder, sodium sulfite and a mixture thereof can be employed. When using iron powder, it may be added in an amount within a range of not less than 0.1 wt% and not more than 1 wt%, or particularly not less than 0.2 wt% and not more than 0.5 wt% to the used amount of the over size ores of the oxide ore 102a and the oxide ore 102b. Here, a particle size of the iron powder may be a diameter of about 1 mm, and iron with its surface being not oxidized may be used. When using sodium sulfite, it may be added in an amount within a range of not less than 1 wt% and not more than 10 wt%, particularly not less than 5 wt% and not more than 8 wt% to the amount of the over size ores of the oxide ore 102a and the oxide ore 102b.

By adding the reducing agent within the above range, the reducing agent may be sufficiently effective to further efficiently improve a leaching rate of nickel and cobalt, particularly of cobalt by synergy with, for example, control in an iron concentration in another step. Thus, while reducing a cost for removing iron, a recovery rate for nickel and cobalt may be further improved.

Addition of a reducing agent would be effective for improving a leaching rate of nickel and cobalt, particularly of cobalt because of the following reason.

That is to say, cobalt in the over size ores of the oxide ore 102a and the oxide ore 102b exists as a bivalent oxide (CoO) and a trivalent oxide (Co₂O₃), and a ratio of these oxides would be dependent on a mining place. Binding state between cobalt and oxygen is stronger and more stable in Co₂O₃ than in CoO. It is, therefore, not easy to decompose the bond between cobalt and oxygen in a trivalent cobalt oxide contained in the slurry ore 104 with sulfuric acid 105. Thus, it would be estimated that by adding a reducing agent in addition to sulfuric acid 105, a binding power between cobalt and oxygen in the trivalent cobalt oxide becomes weaker and the cobalt is reduced from trivalent to bivalent, allowing cobalt to be more easily leached with sulfuric acid 105.

### (EXAMPLES)

There will be more specifically described the present invention with reference to experimental examples. In addition, the amount of each component in oxide ores in Table 3 to Table 6 is expressed as wt% to the amount of the oxide ore.

Table 3 to Table 6 shows the conditions and the results in Experimental Example 1 to Experimental Example 4.
(Table 3)

**Table 3**

| **Ore No.** | **Particle size** | **Ratio (wt%)** | **Ni (wt%)** | **Co (wt%)** | **Fe (wt%)** | **Mg (wt%)** | **Mg/Fe ratio** |
|---|---|---|---|---|---|---|---|
| **L-1** | **Total** | **100** | **1.10** | **0.090** | **45.0** | **1.5** | **0.03** |
| | **-2mm** | **85** | **1.07** | **0.085** | **48.5** | **0.7** | **0.01** |
| | **+2mm** | **15** | **1.25** | **0.120** | **25.0** | **6.0** | **0.24** |
| **L-2** | **Total** | **100** | **1.80** | **0.120** | **25.0** | **9.3** | **0.37** |
| | **-2mm** | **75** | **1.85** | **0.125** | **30.0** | **5.0** | **0.17** |
| | **+2mm** | **25** | **1.65** | **0.105** | **10.0** | **22.0** | **2.20** |

(Table 4)

**Table 4**

| | **Used ore ratio (wt%)** | | **Water** | **Reducing agent** | | **Sulfuric acid amount/ore amount** | **Temperature (°C)** | |
|---|---|---|---|---|---|---|---|---|
| | **L-1 (+2mm)** | **L-2(+2mm)** | | **Presence** | **Amount/ore amount** | | **Leaching** | **Reaction** |
| **Exp. Example 1** | **71** | **29** | **River water** | **Absent** | **0** | **0.63** | **95** | **95** |
| **Exp. Example 2** | **71** | **29** | **Marine water** | **Absent** | **0** | **0.63** | **95** | **95** |
| **Exp. Example 3** | **71** | **29** | **Marine water** | **Iron powder** | **0.003** | **0.63** | **95** | **95** |

(Table 5)

**Table 5**

| | **Atmospheric pressure leaching rate (wt%)** | | | | **Atmospheric pressure solution** | | | |
|---|---|---|---|---|---|---|---|---|
| | **Ni^{.}** | **Co** | **Fe** | **Mg** | **Fe(g/L)** | **Fe/Ni concentration ratio** | **Free sulfuric acid amount (g/L)** | **pH** |
| **Exp. Example 1** | **87.5** | **83.6** | **3.8** | **83.7** | **3.25** | **0.65** | **12** | **1.8** |
| **Exp. Example 2** | **89.6** | **85.2** | **0.8** | **84.6** | **0.67** | **0.13** | **5** | **2.4** |
| **Exp. Example 3** | **90.3** | **91.5** | **1.2** | **82.9** | **1.00** | **0.20** | **5** | **2.4** |

(Table 6)

**Table 6**

| | **Leaching rate in the total oxide ore (wt%)** | | |
|---|---|---|---|
| | **Ni** | **Co** | **Fe** |
| **Exp. Example 1** | **91.8** | **92.0** | **0.9** |
| **Exp. Example 2** | **92.2** | **92.3** | **0.6** |
| **Exp. Example 3** | **92.3** | **93.5** | **0.7** |
| **Exp. Example 4** | **75.3** | **74.8** | **0.3** |

### (Experimental Example 1)

In the present experimental example, an oxide ore L-1 containing Ni: 1.10 %, Co: 0.090 %, Fe: 45.0% and Mg: 1.5% with an Mg/Fe ratio: 0.03 and present in a relatively upper layer of a nickel oxide ore deposit zone and an oxide ore L-2 containing Ni: 1.80 %, Co: 0.120 %, Fe: 25.0 % and Mg: 9.3 % with an Mg/Fe ratio: 0.37 and present in a middle layer in a nickel oxide ore deposit zone were used. Here, in terms of a mixing ratio of L-1 to L-2, content of L-1 and content of L-2 were 80% and 20%, respectively, for making the ratio substantially equal to a ratio of L-1 to L-2 in the nickel oxide ore deposit zone. As shown in Table 3, L-1 was an ore with a higher iron content and a lower magnesium content, and L-2 was an ore with a lower iron content and a higher magnesium content.

Each of L-1 and L-2 was classified using a screen with a mesh of 2 mm. The L-1 gave 15 wt% of a +2 mm oxide ore and 85 wt% of a -2 mm oxide ore, and the L-2 gave 25 wt% of a +2 mm oxide ore and 75 wt% of a -2 mm oxide ore. In the total amount of the +2 mm oxide ore thus obtained, the rate of L-1 and the rate of L-2 were 71 wt% and 29 wt%, respectively. With respect to each +2 mm oxide ore, the +2 mm oxide ore in L-1 contains Ni: 1.25 %, Co: 0.120 %, Fe: 25.0 % and Mg: 6.0 % with an Mg/Fe ratio: 0.24, and the +2 mm oxide ore in L-2 contains Ni: 1.65 %, Co: 0.105 %, Fe: 10.0 % and Mg: 22.0 % with an Mg/Fe ratio: 2.20. As shown in Table 3, the magnesium contents in the -2 mm oxide ore in L-1 and the -2 mm oxide ore in the L-2 are lower than the magnesium contents in the +2 mm oxide ore in the L-1 and the +2 mm oxide ore in the L-2.

The +2 mm oxide ore in the L-1 was crushed to chip the total amount into -2 mm. Then, river water was added to obtain a 28 wt% concentration slurry ore. Then, 0. 63 times by weight amount of 98 wt% concentration sulfuric acid was added to the total weight of the +2 mm oxide ore in the L-1 and the +2 mm oxide ore in the L-2, and then the mixture was leached with stirring for 6 hours under the conditions of a temperature of 95 °C and an atmospheric pressure for leaching.

To the sulfuric acid leachate and the leaching residue thus obtained was added an oxide ore as a 40 wt% concentration slurry ore prepared by adding river water to the crushed +2 mm oxide ore in the L-2. The mixture was subjected to an atmospheric-pressure reaction by mixing it with stirring under the conditions of a temperature of 95 °C and an atmospheric pressure for 6 hours. After the atmospheric-pressure reaction, leaching rates observed were Ni: 87.5%, Co: 83.6 %, Fe: 3.8 % and Mg: 83.7 %. The atmospheric-pressure reaction solution had the following properties; Fe concentration: 3.25 g/L, Fe/Ni concentration ratio: 0.65, free sulfuric acid: 12 g/L and pH: 1.8. Thus, leaching rates for nickel and cobalt were improved while controlling a leaching rate for iron.

Furthermore, the -2 mm oxide ores in the L-1 and the L-2 classified by a screen were combined, and the mixture was pressure leached with sulfuric acid under the conditions of a temperature of 240 °C and a pressure of 35kg/cm² (about 34 atm) using an autoclave. Leaching rates after the pressure leaching were Ni: 93 %, Co: 94 % and Fe: 0.6 %.

In other words, the leaching rates as the sum of the leaching rates for the individual components by the atmosphericpressure leaching using the oxide ores the L-1 and the L-2 and the leaching rates of the individual components by the pressure leaching were Ni: 91.8 %, Co: 92 % and Fe: 0.9%. Thus, while improving leaching rates for nickel and cobalt, a leaching rate for iron can be further controlled.

The solution after the atmospheric pressure reaction was combined with the solution after the pressure leaching. Then, to the mixture was added a ferronickel slag as a neutralizing agent for adjusting a pH, to obtain a neutralization solution and a neutralization residue. Next, a polymer flocculant was added to the neutralization solution containing the neutralization residue. The mixture was subjected to solid-liquid separation using countercurrent 6 stage thickener, to separate the neutralization solution from the neutralization residue. Next, the neutralization solution was processed in the nickel/cobalt recovery step to recover nickel and cobalt.

### (Experimental example 2)

The experiment was performed under the same conditions described in Experimental example 1, except that marine water was used in place of river water as water.

Here, leaching rates after the atmospheric pressure reaction were Ni: 89.6%, Co: 85.2%, Fe: 0.8% and Mg 84.6%. The atmospheric-pressure reaction solution had the following properties; Fe concentration: 0.67 g/L, Fe/Ni concentration ratio: 0.13, free sulfuric acid: 5 g/L and pH: 2.4. While improving leaching rates for nickel and cobalt, controlling a leaching rate for iron was achieved. Furthermore, the -2 mm oxide ores in the L-1 and the L-2 were combined, and the mixture was pressure-leached with sulfuric acid under the conditions of a temperature of 240 °C and a pressure of 35 kg/cm² (about 34 atm) using an autoclave. Leaching rates were Ni: 93 %, Co: 94 % and Fe: 0.6 %.

In other words, the leaching rates as the sum of the leaching rates for the individual components by the atmospheric-pressure leaching using the oxide ores L-1 and L-2 and the leaching rates of the individual components by the pressure leaching were Ni: 92.2 %, Co: 92.3 % and Fe: 0.6 %. Thus, while improving leaching rates for nickel and cobalt, controlling a leaching rate for iron was further achieved.

### (Experimental example 3)

The experiment was performed under the same conditions described in Experimental example 1, except that marine water was used in place of river water as water and iron powder (particle size: 1 mm) as a reducing agent was added in 0.003 times amount to the total amount of the oxide ore in the leaching step.

Here, leaching rates after the atmospheric-pressure reaction were Ni: 90.3 %, Co: 91.5%, Fe: 1.2% and Mg 82.9%. The atmospheric-pressure reaction solution had the following properties; Fe concentration: 1.00 g/L, Fe/Ni concentration ratio: 0.20, free sulfuric acid: 5 g/L and pH: 2.4. While further improving leaching rates for nickel and cobalt, controlling a leaching rate for iron was achieved. Furthermore, the -2 mm oxide ores in the L-1 and the L-2 were combined, and the mixture was pressure leached with sulfuric acid under the conditions of a temperature of 240 °C and a pressure of 35kg/cm² (about 34 atm) using an autoclave. Leaching rates were Ni: 93 %, Co: 94 % and Fe: 0.6 %. In other words, the leaching rates as the sum of the leaching rates for the individual components by the atmospheric pressure leaching using the oxide ores L-1 and L-2 and the leaching rates of the individual components by the pressure leaching were Ni: 92.3 %, Co: 93.5 % and Fe: 0.7 %. Thus, while improving leaching rates for nickel and cobalt, controlling a leaching rate for iron was further achieved.

### (Experimental example 4)

When only an -2 mm oxide ore classified by a screen was pressure leached with sulfuric acid under the conditions of a temperature of 240 °C and a pressure of 35kg/cm² (about 34 atm) using an autoclave without performing atmospheric pressure leaching using a +2 mm oxide ore in each of the L-1 and the L-2, leaching rates on the basis of the weight of the total oxide ore (the L-1 and the L-2) including the +2mm oxide ores were Ni: 75.3 %, Co: 74.8 % and Fe: 0.3 % while leaching rates by pressure leaching were Ni: 93 %, Co: 94 % and Fe: 0.6 %.

From Experimental example 1 to Experimental example 3, it has been shown that by using two oxide ores with different magnesium contents, a leaching rate for nickel and cobalt can be improved while controlling a leaching rate for iron and a cost for neutralizing a reaction solution can be reduced. Furthermore, from Experimental example 1 to Experimental example 4, it has been shown that by leaching a + 2 mm oxide ore under an atmospheric pressure and a by pressure leaching -2 mm oxide ore, a leaching rate for nickel and cobalt can be improved while further controlling a leaching rate for iron.

## Claims

1. A process for recovering nickel or cobalt from an oxide ore containing nickel or cobalt and iron, comprising the steps of:
a preparing step where a first oxide ore and a second oxide ore with a higher magnesium content than the first oxide ore are prepared as the oxide ore;
a classifying step where said first oxide ore is classified into a first small particle oxide ore and a first large particle oxide ore and said second oxide ore is classified into a second small particle oxide ore and second large particle oxide ore;
a leaching step where nickel or cobalt is leached from said first large particle oxide ore with sulfuric acid to obtain a sulfuric acid leachate containing nickel or cobalt and a leaching residue;
a pressure leaching step where nickel or cobalt is pressure leached from said first small particle oxide ore and said second small particle oxide ore with sulfuric acid to obtain a sulfuric acid pressure leachate containing nickel or cobalt and a pressure leaching residue;
a reaction step where the sulfuric acid leachate containing the leaching residue is mixed with said second large particle oxide ore to react said sulfuric acid leachate with magnesium in said second oxide ore for adjusting a pH to obtain a reaction solution containing nickel or cobalt and a reaction residue containing iron; and
a neutralization step where said reaction solution containing said reaction residue is neutralized with a neutralizing agent to obtain a neutralization solution containing nickel or cobalt and a neutralization residue containing iron.

2. The process according to claim 1, wherein an iron content in said second oxide ore is lower than that in said first oxide ore.

3. The process according to claim 1, further comprising:
after said pressure leaching step, neutralizing said sulfuric acid pressure leachate containing said pressure leaching residue with a neutralizing agent to obtain a neutralization solution containing nickel or cobalt and a neutralization residue containing iron.

4. The process according to any one of claims 1 to 3,
wherein a magnesium content in said first small particle oxide ore and a magnesium content in said second small particle oxide ore are lower than a magnesium content in said first large particle oxide ore and a magnesium content in said second large particle oxide ore.

5. The process according to any one of claims 1 to 4, further comprising:
after said neutralizing step, a solid-liquid separating step where said neutralization solution and said neutralization residue are solid-liquid separated using a thickener with a flocculant.

6. The process according to any one of claims 1 to 5, wherein both said leaching step and said reaction step are performed at an atmospheric pressure.

7. The process according to any one of claims 1 to 6,
wherein in said leaching step, nickel or cobalt is leached from said first oxide ore further using a sodium salt to obtain a sulfuric acid leachate containing nickel or cobalt and a leaching residue; and
in said reaction step, said sulfuric acid leachate containing said leaching residue is reacted with magnesium contained in said second oxide ore for adjusting a pH to obtain a reaction solution containing nickel or cobalt and a reaction residue containing iron.

8. The process according to any one of claims 1 to 7, wherein both said leaching step and said reaction step are performed at a temperature of 90 °C or higher.

9. The process according to any one of claims 1 to 8, wherein the amount of said sulfuric acid is not less than 50 wt% and not more than 80 wt% of the consumed quantity of said first oxide ore in said leaching step.

10. The process according to any one of claims 1 to 9, wherein said neutralizing agent is a slag containing magnesium.

11. The process according to any one of claims 1 to 10, wherein in said leaching step, a reducing agent is further added and nickel or cobalt is leached from said first oxide ore to obtain a sulfuric acid leachate containing nickel or cobalt and a leaching residue.

12. The process according to claim 11, wherein said reducing agent is an iron powder.

## Patentansprüche

1. Verfahren zur Gewinnung von Nickel oder Kobalt aus einem Oxid-Erz, das Nickel oder Kobalt und Eisen enthält, umfassend die Schritte:
einen Herstellungsschritt, worin als Oxid-Erz ein erstes Oxid-Erz und ein zweites Oxid-Erz mit einem höheren Magnesiumgehalt als das erste Oxid-Erz hergestellt werden;
einen Klassifizierungsschritt, worin das erste Oxid-Erz zu einem ersten kleinteiligen Oxid-Erz und einem ersten großteiligen Oxid-Erz klassifiziert wird und das zweite Oxid-Erz zu einem zweiten kleinteiligen Oxid-Erz und einem zweiten großteiligen Oxid-Erz klassifiziert wird;
einen Auswaschungsschritt, worin Nickel oder Kobalt aus dem ersten großteiligen Oxid-Erz mit Schwefelsäure ausgewaschen wird, um eine Schwefelsäureauswaschung zu erhalten, die Nickel oder Kobalt und einen Auswaschungsrückstand enthält;
einen Druck-Auswaschungsschritt, worin Nickel oder Kobalt aus dem ersten kleinteiligen Oxid-Erz und dem zweiten kleinteiligen Oxid-Erz mit Schwefelsäure druck-ausgewaschen wird, um eine Schwefelsäure-Druckauswaschung zu erhalten, die Nickel oder Kobalt und einen Druck-Auswaschungsrückstand enthält;
einen Reaktionsschritt, worin die Schwefelsäureauswaschung, die den Auswaschungsrückstand enthält, mit dem zweiten großteiligen Oxid-Erz gemischt wird, um zur Einstellung des pH-Werts die Schwefelsäureauswaschung mit Magnesium in dem zweiten Oxid-Erz umzusetzen, um eine Reaktionslösung zu erhalten, die Nickel oder Kobalt und einen Reaktionsrückstand enthält, der Eisen enthält; und
einen Neutralisationsschritt, worin die Reaktionslösung, die den Reaktionsrückstand enthält, mit einem Neutralisationsmittel neutralisiert wird, um eine Neutralisationslösung zu erhalten, die Nickel oder Kobalt und einen Neutralisationsrückstand enthält, der Eisen enthält.

2. Verfahren gemäß Anspruch 1, worin der Eisengehalt in dem zweiten Oxid-Erz niedriger ist als in dem ersten Oxid-Erz.

3. Verfahren gemäß Anspruch 1, ferner umfassend:
Nach dem Druck-Auswaschungsschritt das Neutralisieren der Schwefelsäure-Druckauswaschung, die den Druck-Auswaschungsrückstand enthält, mit einem Neutralisationsmittel, um eine Neutralisationslösung, die Nickel oder Kobalt enthält, und einen Neutralisationsrückstand, der Eisen enthält, zu erhalten.

4. Verfahren gemäß irgendeinem der Ansprüche 1 bis 3, worin der Magnesiumgehalt in dem ersten kleinteiligen Oxid-Erz und der Magnesiumgehalt in dem zweiten kleinteiligen Oxid-Erz niedriger sind als der Magnesiumgehalt in dem ersten großteiligen Oxid-Erz und dem Magnesiumgehalt in dem zweiten großteiligen Oxid-Erz.

5. Verfahren gemäß irgendeinem der Ansprüche 1 bis 4, ferner umfassend:
nach dem Neutralisationsschritt einen Fest-/Flüssig-Auftrennungsschritt, worin die Neutralisationslösung und der Neutralisationsrückstand fest-/flüssig-separiert werden, wobei ein Verdickungsmittel mit einem Flockungsmittel verwendet wird.

6. Verfahren gemäß irgendeinem der Ansprüche 1 bis 5, worin sowohl der Auswaschungsschritt als auch der Reaktionsschritt unter Atmosphärendruck durchgeführt werden.

7. Verfahren gemäß irgendeinem der Ansprüche 1 bis 6,
worin in dem Auswaschungsschritt Nickel oder Kobalt aus dem ersten Oxid-erz ausgewaschen wird, wobei ferner ein Natriumsalz eingesetzt wird, um eine Schwefelsäureauswaschung, die Nickel oder Kobalt und einen Auswaschungsrückstand enthält, zu erhalten; und
in dem Reaktionsschritt die Schwefelsäureauswaschung, die den Auswaschungsrückstand enthält, mit Magnesium, das in dem zweiten Oxid-Erz enthalten ist, umgesetzt wird, um den pH-Wert einzustellen, um eine Reaktionslösung zu erhalten, die Nickel oder Kobalt und einen Reaktionsrückstand, der Eisen enthält, enthält.

8. Verfahren gemäß irgendeinem der Ansprüche 1 bis 7, worin sowohl der Auswaschungsschritt als auch der Reaktionsschritt bei einer Temperatur von 90°C oder höher durchgeführt werden.

9. Verfahren gemäß irgendeinem der Ansprüche 1 bis 8, worin die Menge der Schwefelsäure nicht weniger als 50 Gew.% und nicht mehr als 80 Gew.% der verbrauchten Menge des ersten Oxid-Erzes in dem Auswaschungsschritt beträgt.

10. Verfahren gemäß irgendeinem der Ansprüche 1 bis 9, worin das Neutralisationsmittel eine Schlacke ist, die Magnesium enthält.

11. Verfahren gemäß irgendeinem der Ansprüche 1 bis 10, worin in dem Auswaschungsschritt ferner ein Reduktionsmittel zugegeben wird und Nickel oder Kobalt aus dem ersten Oxid-Erz ausgewaschen wird, um eine Schwefelsäureauswaschung zu erhalten, die Nickel oder Kobalt und einen Auswaschungsrückstand enthält.

12. Verfahren gemäß Anspruch 11, worin das Reduktionsmittel ein Eisenpulver ist.

## Revendications

1. Procédé de récupération de nickel ou de cobalt à partir d'un minerai d'oxyde contenant du nickel ou du cobalt et du fer, comprenant les étapes suivantes :
une étape de préparation où un premier minerai d'oxyde et un second minerai d'oxyde avec une teneur en magnésium plus élevée que le premier minerai d'oxyde sont préparés en tant que minerai d'oxyde ;
une étape de classification où ledit premier minerai d'oxyde est classifié en un premier minerai d'oxyde à petite particule et un premier minerai d'oxyde à grande particule et ledit second minerai d'oxyde est classifié en un second minerai d'oxyde à petite particule et un second minerai d'oxyde à grande particule ;
une étape de lixiviation où le nickel ou le cobalt est lixivié à partir dudit premier minerai d'oxyde à grande particule avec de l'acide sulfurique afin d'obtenir un lixiviat d'acide sulfurique contenant du nickel ou du cobalt et un résidu de lixiviation ;
une étape de lixiviation sous pression où le nickel ou le cobalt est lixivié sous pression à partir dudit premier minerai d'oxyde à petite particule et dudit second minerai d'oxyde à petite particule avec de l'acide sulfurique afin d'obtenir un lixiviat sous pression d'acide sulfurique contenant du nickel ou du cobalt et un résidu de lixiviat sous pression ;
une étape de réaction où le lixiviat d'acide sulfurique contenant le résidu de lixiviation est mélangé audit second minerai d'oxyde à grande particule afin de faire réagir ledit lixiviat d'acide sulfurique avec le magnésium dans ledit second minerai d'oxyde pour ajuster un pH afin d'obtenir une solution de réaction contenant du nickel ou du cobalt et un résidu de réaction contenant du fer ; et
une étape de neutralisation où ladite solution de réaction contenant ledit résidu de réaction est neutralisée avec un agent neutralisant afin d'obtenir une solution de neutralisation contenant du nickel ou du cobalt et un résidu de neutralisation contenant du fer.

2. Procédé selon la revendication 1, dans lequel une teneur en fer dudit second minerai d'oxyde est inférieure à celle dudit premier minerai d'oxyde.

3. Procédé selon la revendication 1, comprenant en outre :
après ladite étape de lixiviation sous pression, la neutralisation dudit lixiviat sous pression d'acide sulfurique contenant ledit résidu de lixiviation sous pression avec un agent neutralisant afin d'obtenir une solution de neutralisation contenant du nickel ou du cobalt et un résidu de neutralisation contenant du fer.

4. Procédé selon l'une quelconque des revendications 1 à 3,
dans lequel une teneur en magnésium dudit premier minerai d'oxyde à petite particule et une teneur en magnésium dudit second minerai d'oxyde à petite particule sont inférieures à une teneur en magnésium dudit premier minerai d'oxyde à grande particule et une teneur en magnésium dudit second minerai d'oxyde à grande particule.

5. Procédé selon l'une quelconque des revendications 1 à 4, comprenant en outre :
après ladite étape de neutralisation, une étape de séparation solide-liquide où ladite solution de neutralisation et ledit résidu de neutralisation sont séparés en solide-liquide en utilisant un épaississant avec un floculant.

6. Procédé selon l'une quelconque des revendications 1 à 5, dans lequel à la fois ladite étape de lixiviation et ladite étape de réaction sont réalisées à une pression atmosphérique.

7. Procédé selon l'une quelconque des revendications 1 à 6,
dans lequel à ladite étape de lixiviation, le nickel ou le cobalt est lixivié à partir dudit premier minerai d'oxyde en utilisant en outre un sel de sodium afin d'obtenir un lixiviat d'acide sulfurique contenant du nickel ou du cobalt et un résidu de lixiviation ; et
à ladite étape de réaction, ledit lixiviat d'acide sulfurique contenant ledit résidu de lixiviation est mis à réagir avec le magnésium contenu dans ledit second minerai d'oxyde pour ajuster un pH afin d'obtenir une solution de réaction contenant du nickel ou du cobalt et un résidu de réaction contenant du fer.

8. Procédé selon l'une quelconque des revendications 1 à 7, dans lequel à la fois ladite étape de lixiviation et ladite étape de réaction sont réalisées à une température de 90 °C ou plus.

9. Procédé selon l'une quelconque des revendications 1 à 8, dans lequel la quantité dudit acide sulfurique n'est pas inférieure à 50 % en poids et pas supérieure à 80 % en poids de la quantité consommée dudit premier minerai d'oxyde à ladite étape de lixiviation.

10. Procédé selon l'une quelconque des revendications 1 à 9, dans lequel ledit agent neutralisant est une scorie contenant du magnésium.

11. Procédé selon l'une quelconque des revendications 1 à 10, dans lequel à ladite étape de lixiviation, un agent réducteur est en outre ajouté et le nickel ou le cobalt est lixivié à partir dudit premier minerai d'oxyde afin d'obtenir un lixiviat d'acide sulfurique contenant du nickel ou du cobalt et un résidu de lixiviation.

12. Procédé selon la revendication 11, dans lequel ledit agent réducteur est une poudre de fer.
